# EUROPÄISCHE PATENTSCHRIFT

(11) **EP 1 765 655 B1**
(45) Veröffentlichungstag und Bekanntmachung des Hinweises auf die Patenterteilung: **04.06.2008**
(21) Anmeldenummer: 05764045.0
(22) Anmeldetag: 08.07.2005
(51) Int. Cl.: B62D 5/06

(54) **HYDRAULISCHE SERVOLENKUNG UND VERFAHREN ZUR BESTIMMUNG EINES LENKMOMENTS**
HYDRAULIC POWER-ASSISTED STEERING AND METHOD FOR DETERMINING STEERING WHEEL TORQUE
SERVOCMMANDE HYDRAULIQUE ET PROCEDE POUR DETERMINER UN COUPLE DE COMMANDE

(30) Priorität: 09.07.2004 DE 102004033686
(43) Veröffentlichungstag der Anmeldung: 28.03.2007
(73) Patentinhaber: Continental Teves AG & Co. oHG, 60488 Frankfurt am Main (DE)
(72) Erfinder: NELL, Joachim, 63452 Hanau (DE); BAYER, Ronald, 63165 Mühlheim/Main (DE); LINKENBACH, Steffen, 65760 Eschborn (DE); BÖHM, Jürgen, 65558 Oberneisen (DE); HOFFMANN, Oliver, 60486 Frankfurt (DE); SCHIRLING, Andreas, 64319 Pfungstadt (DE); MUTH, Norman, 35066 Frankenberg (DE)
(86) Internationale Anmeldenummer: PCT/EP2005/053279
(87) Internationale Veröffentlichungsnummer: WO 2006/005730

(56) Entgegenhaltungen:
- WO-A-20/04005112
- DE-A1- 10 256 306
- DE-C1- 4 422 386

## Beschreibung

Die Erfindung betrifft eine hydraulische Servolenkung mit einem Lenkgetriebe und mit einem hydraulischen Aktuator zur Unterstützung einer Lenkradbetätigung durch den Fahrer eines Fahrzeugs, insbesondere eines Kraftfahrzeugs, der Mittel zur aktiven Aufbringung eines Zusatz-Lenkmoments zugeordnet sind.

Die Erfindung betrifft auch ein Verfahren, welches zur Bestimmung eines Lenkmoments für eine hydraulische Servolenkung vorgesehen ist, mit einem Lenkgetriebe und mit einem hydraulischen Aktuator zur Unterstützung einer Lenkradbetätigung durch den Fahrer eines Fahrzeugs, insbesondere eines Kraftfahrzeugs, der Mittel zur aktiven Aufbringung eines Zusatz-Lenkmoments zugeordnet sind.

Heutige Kraftfahrzeuge, insbesondere Personenkraftwagen, sind in der Regel mit hydraulischen oder elektrohydraulischen Servolenkungen ausgestattet, im folgenden als "hydraulische Servolenkungen" bezeichnet. Die Servounterstützung ist derart aufgebaut, dass im Mittelbereich des Lenkmechanismus Aktuatoren, z.B. Hydraulikzylinder, angeordnet sind. Durch eine von den Aktuatoren erzeugte Kraft wird die Betätigung des Lenkmechanismus in Reaktion auf die Drehung des Lenkrads unterstützt (Momentenunterstützung). Das zum Lenken des Fahrzeugs aufzubringende Moment wird so verringert und der Fahrer bei der Lenktätigkeit entlastet.

Es ist bekannt, die Momentenunterstützung oder die Verstärkung der Lenkung geschwindigkeitsabhängig auszulegen. Bei niedrigen Fahrzeuggeschwindigkeiten, wie sie für das Einparken oder Ausparken typisch sind, wird eine sehr leichtgängige Lenkung mit einer großen Momentenunterstützung bevorzugt, während bei schneller Fahrt eine schwergängigere Lenkung mit geringer Momentenunterstützung wünschenswert ist.

Das Dokument WO 2004/005112A offenbart die Merkmale des Oberbegriffs des Anspruchs 1 und des Anspruchs 7.

Aufgabe der Erfindung ist es, bei einer hydraulischen Servolenkung mit einer variablen Momentenunterstützung den technischen Aufwand zu reduzieren und damit eine Verminderung der Gestehungskosten zu ermöglichen.

Diese Aufgabe wird mit den Merkmalen der unabhängigen Ansprüche gelöst. Abhängige Ansprüche sind auf bevorzugte Ausführungsformen der Erfindung gerichtet.

Unter dem Begriff "Lenkrad" sind hier alle denkbaren Betätigungseinrichtungen zum Lenken eines Fahrzeugs, wie Lenkhandrad, Steuerknüppel oder "Joystick", zu verstehen.

Wesentlich für die Erfindung ist es, dass die Mittel zur aktiven Aufbringung eines Zusatz-Lenkmoments zumindest einen Zusatzmoment-Aktuator und ein Erfassungsmittel für das Lenkmoment aufweisen, welches Erfassungsmittel ein Druckerfassungsmittel für einen hydraulischen Druck ist.

Es ist erfindungsgemäß vorgesehen, dass das Druckerfassungsmittel in einer hydraulischen Leitung zwischen einer hydraulischen Druckerhöhungseinheit (Pumpe) und einem Lenkventil angeordnet ist.

Erfindungsgemäß ist es vorgesehen, dass mit dem Druckerfassungsmittel ein hydraulischer Druck in einer jeweils aktiven Arbeitskammer eines hydraulischen Aktuators zur Unterstützung einer Lenkradbetätigung durch den Fahrer abgeschätzt oder ermittelt wird.

Es ist erfindungsgemäß vorgesehen, dass der Zusatzmoment-Aktuator als eine Einheit ausgebildet sind, die als ein Modul an einer Lenkradwelle angeordnet sind, welche das Lenkrad mit dem Lenkgetriebe verbindet.

Erfindungsgemäß ist es vorgesehen, dass der Zusatzmoment-Aktuator einen Elektromotor aufweist, welcher an der Lenksäule angekoppelt ist.

Erfindungsgemäß ist es vorgesehen, dass die Mittel zur aktiven Aufbringung eines Zusatz-Lenkmoments einen Elektromotor, eine redundante elektronische Steuerungs- und Regelungseinheit (ECU) und einen redundanten Lenkradmomentensensor aufweisen.

Es ist erfindungsgemäß vorgesehen, dass die Mittel zur aktiven Aufbringung eines Zusatz-Lenkmoments ein Getriebe aufweisen, das mit dem Zusatzmoment-Aktuator zusammenwirkt.

Nach der Erfindung ist das Getriebe ein Riemengetriebe, ein Schrauben-/Schneckengetriebe oder ein Stirnradgetriebe, vorzugsweise ein Riemengetriebe.

Erfindungsgemäß ist es vorgesehen, dass der Zusatzmoment-Aktuator mittels Ansteuerung durch eine elektronische Steuerungs- und Regelungseinheit (ECU) ein an die aktuelle Fahrzeuggeschwindigkeit angepasstes Zusatz-Lenkradmoment erzeugt.

Nach der Erfindung ist es vorgesehen, dass der Zusatzmoment-Aktuator mittels Ansteuerung durch eine elektronische Steuerungs- und Regelungseinheit (ECU) ein an Fahrzeugkurs und den Fahrbahnverlauf angepasstes Zusatz-Lenkradmoment erzeugt.

Dazu sind vorzugsweise ein Sollbahnerfassungsmittel zum Ermitteln einer Sollbahn bzw. eines Sollbahnwinkels aus einem erfassten oder abgeschätzten Fahrbahnverlauf, ein Istbahn-Erfassungsmittel zum Ermitteln einer Istbahn und eines Istbahnwinkels aus einem erfassten oder abgeschätzten Fahrzeugkurs, ein Vergleichsmittel zum Vergleichen der Sollbahn und des Sollbahnwinkels mit der Istbahn und dem Istbahnwinkel und ein Nullpunktsverschiebemittel vorgesehen, um den Nullpunkt der Kennlinie für die Unterstützung der Lenkhandhabe nach Maßgabe des Vergleichs zu verschieben.

Es ist erfindungsgemäß vorgesehen, dass der Zusatzmoment-Aktuator mittels Ansteuerung durch eine elektronische Steuerungs- und Regelungseinheit (ECU) ein an die aktuelle Fahrzeugdynamik, insbesondere die aktuelle Querbeschleunigung, angepasstes Zusatz-Lenkradmoment erzeugt.

Erfindungsgemäß ist es vorgesehen, dass der Zusatzmoment-Aktuator ein elektromechanischer, elektromagnetischer oder hydraulischer Aktuator ist.

Die Aufgabe wird ebenso durch ein Verfahren gelöst, welches zur Bestimmung eines Lenkmoments für eine hydraulische Servolenkung vorgesehen ist, mit einem Lenkgetriebe und mit einem hydraulischen Aktuator zur Unterstützung einer Lenkradbetätigung durch den Fahrer eines Fahrzeugs, insbesondere eines Kraftfahrzeugs, der Mittel zur aktiven Aufbringung eines Zusatz-Lenkmoments zugeordnet sind. Das Verfahren ist dadurch gekennzeichnet, dass ein hydraulischer Druck erfasst wird und nach Maßgabe des erfassten hydraulischen Drucks das Lenkmoment abgeschätzt oder ermittelt wird.

Bei dem Verfahren wird ein hydraulischer Druck in einer hydraulischen Leitung zwischen einer hydraulischen Druckerhöhungseinheit (Pumpe) und einem Lenkventil erfasst.

Erfindungsgemäß ist es nach dem Verfahren vorgesehen, dass ein hydraulischer Druck erfasst wird, welcher einem hydraulischer Druck in einer jeweils aktiven Arbeitskammer eines hydraulischen Aktuators zur Unterstützung einer Lenkradbetätigung durch den Fahrer entspricht.

Die Erfindung wird in der nachfolgenden Beschreibung unter Bezugnahme auf die Abbildungen (Fig. 1 bis Fig. 4) beispielhaft näher erläutert.

Fig. 1 zeigt schematisch eine Ausführungsform der erfindungsgemäßen Servolenkung mit einem elektromechanischen Aktuator.

Fig. 2 zeigt schematisch eine Ausführungsform der erfindungsgemäßen Servolenkung mit einem hydraulischen Aktuator.

In der Fig. 3 ist eine Ausführungsform der erfindungsgemäßen Servolenkung mit einem magnetischen Zusatzmoment-Aktuator dargestellt.

In der Fig. 4 ist eine Kennlinie einer Servolenkung dargestellt.

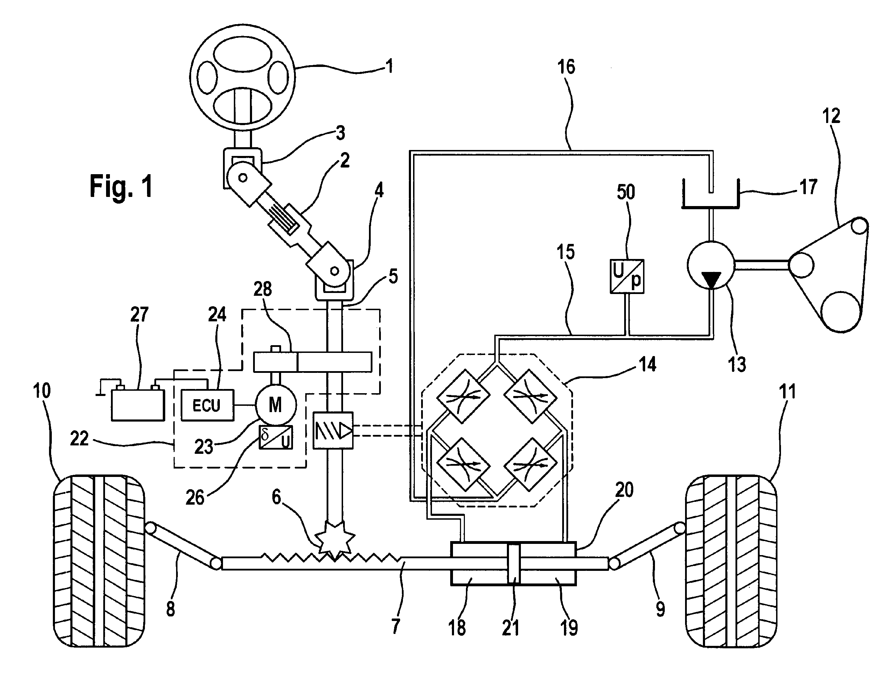

Das in der Fig. 1 dargestellte Lenksystem besteht aus einem Lenkrad 1, einer mit dem Lenkrad 1 verbundenen Lenksäule 2 mit 2 Kreuzgelenken 3,4. Die Lenksäule 2 ist verbunden oder ein Teil einer Lenkradwelle 5, die über ein Lenkgetriebe 6, eine Lenkstange 7, hier als Zahnstange 7 ausgebildet, die seitlich an der Zahnstange 7 befestigten Spurstangen 8,9 betätigt, und dadurch ein Verschwenken der Räder 10,11 bewirkt. Bei der hier gezeigten Zahnstangenlenkung wird eine hydraulische Unterstützung mittels einer von dem Antriebsmotor des Fahrzeugs, z.B. über einen Riementrieb 12, angetriebene hydraulische Pumpe 13 realisiert, die unter Druck stehende Druckflüssigkeit zu einem Lenkventil 14 über eine Leitung 15 liefert. Durch eine Rücklaufleitung 16 kann die Druckflüssigkeit zurück in einen Vorratsbehälter 17 strömen.

In Geradeausstellung des Lenkrads fließt ein konstanter Ölstrom durch das in Neutralstellung stehende Lenkventil (offenen Mitte) und durch die Rücklaufleitung 16 zurück. Der Druck in 2 Kammern 18,19 eines an der Zahnstange 7 angeordneten Arbeitszylinders 20 ist dann gleich groß. Es erfolgt keine Lenkunterstützung.

Beim Drehen des Lenkrads 1 wird die Zahnstange 7 und somit auch der Kolben 21 verschoben. Die Bewegung des Kolbens 21 wird durch den Druck der Druckflüssigkeit unterstützt. Dabei bewirkt das Ventil 14 zugleich, dass Druckflüssigkeit von einer Kammer in die andere Kammer fließt, so dass insgesamt die Lenkbetätigung eine hydraulische Unterstützung erfährt.

Diese oben beschriebene konventionelle hydraulische Servolenkung weist eine Einheit zur Erzeugung eines Zusatz-Moments 22 auf, mit einem Zusatzmoment-Aktuator 23, hier eine Elektromotor 23, einer redundanten Steuerungseinheit ECU 24 zur Ansteuerung des Motors 23 und zur Auswertung von Signalen eines Erfassungsmittels für das Lenkmoment (Lenkmomentensensors 50) und eines Sensors für die Motorlage 26.

Das mit dem Erfassungsmittel 50 gemessene Fahrerlenkmoment wird hier als Eingangsgröße für die Steuerung der Verstärkungskennlinie des Zusatzmoment-Aktuators 23 benötigt.

Vorteilhaft ist dieser Drucksensors 50 technisch weniger aufwändig als ein elektronischer Drehmomentsensor in der Lenkradwelle 5. Der hydraulische Sensor 50 ist darüber hinaus günstiger und einfacher in ein bestehendes System zu integrieren. Denn eine Anordnung eines elektronischen Drehmomentsensors in der Lenkradwelle ist aufgrund der Platzverhältnisse und der vielfältigen, unterschiedlichen Bauformen oft mit hohem Aufwand verbunden. Darüber hinaus ist ein elektronischer Drehmomentsensor in der Regel ein aufwändiges und damit entsprechen teures Bauteil.
Insgesamt sind daher auch die Kosten für das System nach der Erfindung vergleichsweise gering.

Das Druckerfassungsmittel 50 wird im hydraulischen Bereich zwischen hydraulischer Pumpe 13 und Lenkventil 14 angeordnet. Für bestimmte Anwendungen ist es vorteilhaft, das Druckerfassungsmittel 50 redundant auszuführen.

Da der hydraulische Druck im genannten Bereich ausreichend genau dem Druck in der jeweils aktiven Arbeitskammer 18/19 des Arbeitszylinders 20 ist und damit ausreichend genau die hydraulische Unterstützungskraft ermittelt werden kann, kann, aufgrund der bekannten, nicht veränderlichen geometrischen Daten der Gesamtlenkung, das an der Lenkradwelle 5 wirkende Fahrerlenkmoment ausreichend genau berechnet werden.

Diese aus dem hydraulischen Druck errechnete Größe ersetzt somit das mit einem elektronischen Drehmomentsensor in der Lenkradwelle 5 gemessene Fahrerlenkmoment.

Die elektronischen Bauteile sind an einer elektrischen Energiequelle 27 angeschlossen. Die Steuerungseinheit ECU 24.

Hier weist die Einheit 22 auch die Steuerungseinheit ECU 24 auf. Im Sinne der Erfindung kann die Steuerungseinheit ECU 24 aber auch getrennt davon angeordnet sein. Vorzugsweise besteht die Einheit 22 zumindest aus einem Zusatzmoment-Aktuator 23 und einem Sensor für die Motorlage 26.

Das Lenkradmoment oder Lenkmoment, welches durch die Lenksystemcharakteristik sowie die wirkenden Kräfte definiert ist, kann durch die Einheit zur Erzeugung eines Zusatz-Moments 22 aktiv beeinflusst werden. Dabei wird durch den E-Motor 23 ein Zusatzmoment (Zusatz-Lenkmoment) erzeugt und auf die Lenkstange aufgebracht. Es besteht die Möglichkeit das Moment dem konstruktiv vorgegebenen Lenkradmoment aufzuaddieren oder es von ihm abzuziehen. Die Übertragung des Motormoments kann mit oder ohne Übersetzung direkt oder, wie hier dargestellt, über ein Getriebe 28 erfolgen. Dabei kann ein Riemengetriebe, ein Schrauben-/Schneckengetriebe oder ein Stirnradgetriebe verwendet werden.

Bei Ausfall der Einheit zur Erzeugung eines Zusatz-Moments bleibt die dem Fahrer bekannte Lenkungscharakteristik mit Servounterstützung erhalten. Die Einheit 22 selbst ist dazu fail-silent ausgelegt. Das bedeutet, im Fehlerfall wird diese abgeschaltet.

Mittels der erfindungsgemäßen Einheit zur Erzeugung eines Zusatz-Moments 22 kann vorteilhaft eine konventionelle Servolenkung ohne Modifikationen an der Charakteristik verwendet werden. Die Einheit wird als ein Modul einer konventionellen hydraulischen Servolenkung direkt hinzugefügt, um einen Funktionsgewinn zu erzeugen.

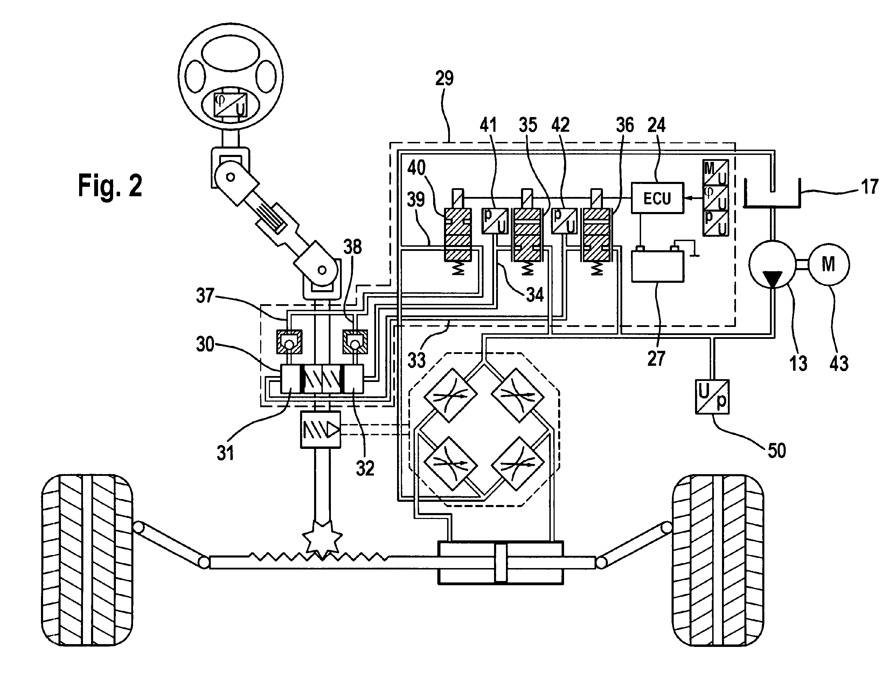

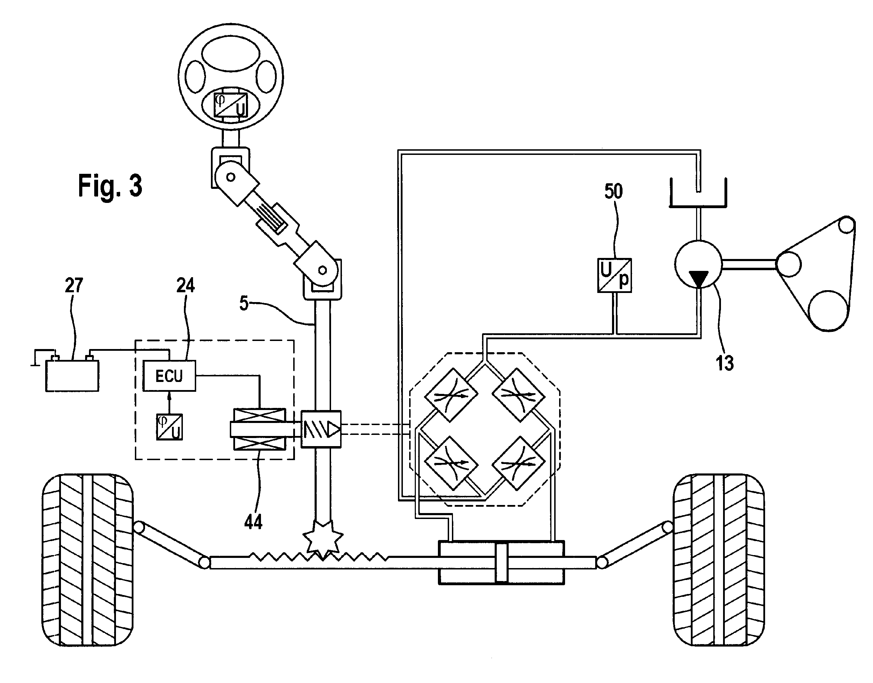

Es ist ebenso möglich, ein Zusatz-Moment durch einen hydraulischen Zusatzmoment-Aktuator (siehe Fig. 2) oder durch einen magnetischen Zusatzmoment-Aktuator (siehe Fig. 3) zu erzeugen.

Das Grund-Lenksystem mit hydraulischer Unterstützung ist identisch zu dem in Fig. 1 gezeigten System und wird daher nicht mehr im einzelnen erläutert.

Bei dem in Fig. 2 dargestellten System wird das Zusatz-Moment durch eine Einheit 29 mit einem hydraulischen Zusatz-moment-Aktuator 30 erzeugt. Erfindungsgemäß wird als Erfassungsmittel für das Lenkmoment ein Druckerfassungsmittel (Drucksensor 50) für einen hydraulischen Druck eingesetzt.

Der hydraulische Zusatzmoment-Aktuator 30 weist 2 hydraulische Kammern 31,32 auf, die mit einer unter Druck stehenden Druckflüssigkeit beaufschlagbar sind über hydraulische Leitungen 33,34, in die jeweils ein hydraulisches, elektromagnetisch betätigbares Ventil 35,36 eingefügt ist. Aus den hydraulischen Kammern 31,32 kann die Druckflüssigkeit über Leitungen 37,38, in die jeweils ein Rückschlagventil eingefügt ist und eine daran anschließende, gemeinsame Leitung 39, in die ein hydraulisches, elektromagnetisch betätigbares Ventil 40 eingefügt ist, in den Vorratsbehälter 17 rückgeführt werden.

Die Ventile 35,36,40 werden zwecks Druckregelung in den Kammern 32,32 und somit zur Regelung des Zusatz-Moments von einer vorzugsweise redundanten Steuerungseinheit ECU 24 angesteuert, nach Maßgabe der Signale des Erfassungsmittels für das Lenkmoment (Drucksensor 50) sowie von zwei Drucksensoren 41,42.

Vorzugsweise wird hier die Pumpe nicht (zwangsweise) vom Antriebsmotor des Fahrzeugs angetrieben (vgl. Fig. 1), sondern von einem eigenen Elektromotor 43. Durch eine entsprechende Ansteuerung des Motors 43 kann die Pumpe 13 den hydraulischen Druck bedarfsgerecht erzeugen, wodurch Energie eingespart werden kann.

Bei der in Fig. 3 dargestellten Ausführungsform wird ein Zusatz-Moment durch einen elektromagnetischen Zusatzmoment-Aktuator 44 erzeugt, der von Steuerungseinheit ECU 24 angesteuert wird. Erfindungsgemäß wird als Erfassungsmittel für das Lenkmoment ein Druckerfassungsmittel (Drucksensor 50) für einen hydraulischen Druck eingesetzt.

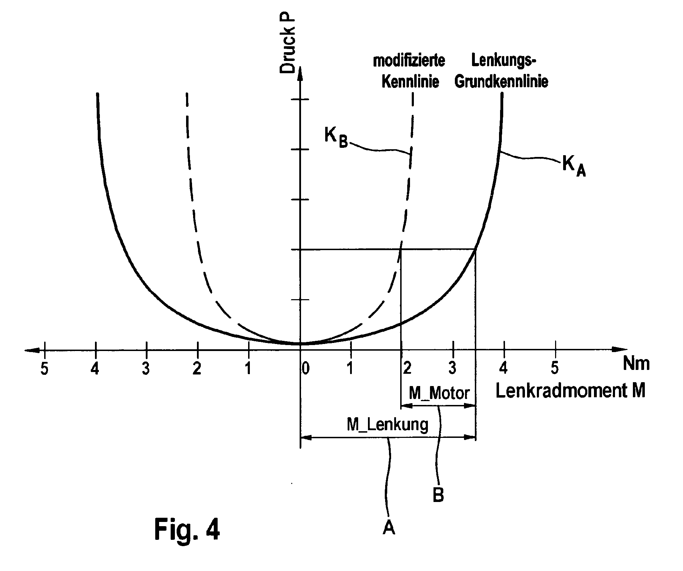

Mit der Erfindung ist es möglich, die Verstärkungskennlinie durch Erzeugung eines Zusatz-Moments zu variieren (siehe Fig. 4). Die Verstärkungskennlinie bedeutet hier die Abhängigkeit des Lenkradmoments oder Betätigungsmoments M vom vorhandenen Systemdruck P der hydraulischen Unterstützung. In dem gezeigten Beispiel wird das Moment A (M_Lenkung) durch eine aktive Aufbringung eines Zusatzmoments B (M_Motor) verringert. Dass bedeutet der Fahrer wird in seiner Lenktätigkeit stärker unterstützt. Es resultiert eine modifizierte Kennlinie (gestrichelte Kurve K_{B}) mit einer geringeren Betätigungskraft gegenüber der ursprünglichen Kennlinie (durchgezogene Kurve K_{A}). Es kann darüber hinaus eine aktive Fahrerassistenz realisiert werden. Dabei wird durch eine Momentenanpassung bzw. -variation eine Lenkempfehlung gegeben werden oder dem Fahrer durch eine Momentenüberhöhung das Lenken erschwert, um ihn vor Gefahren zu warnen.

## Patentansprüche

1. Hydraulische Servolenkung mit einem Lenkgetriebe (6) und mit einem hydraulischen Aktuator (20) zur Unterstützung einer Lenkradbetätigung durch den Fahrer eines Fahrzeugs, insbesondere eines Kraftfahrzeugs, der Mittel zur aktiven Aufbringung eines Zusatz-Lenkmoments zugeordnet sind, wobei die Mittel zur aktiven Aufbringung eines Zusatz-Lenkmoments zumindest einen zusatzmoment-Aktuator (23, 30) ein Erfassungsmittel für das Lenkmoment aufweisen, wobei
das Erfassungsmittel ein Druckerfassungsmittel (50) für einen hydraulischen Druck ist, **dadurch gekennzeichnet, dass** das Druckerfassungsmittel (50) in einer hydraulischen Leitung zwischen einer hydraulischen Druckerhöhungseinheit (13) und einem Lenkventil (14) angeordnet ist.

2. Hydraulische Servolenkung nach Anspruch 1,
**dadurch gekennzeichnet,**
**dass** mit dem Druckerfassungsmittel (50) ein hydraulischer Druck in einer jeweils aktiven Arbeitskammer (18,19) eines hydraulischen Aktuators (20) zur Unterstützung einer Lenkradbetätigung durch den Fahrer abgeschätzt oder ermittelt wird.

3. Hydraulische Servolenkung nach einem der Ansprüche 1 oder 2,
**dadurch gekennzeichnet,**
**dass** der Zusatzmoment-Aktuator als eine Einheit ausgebildet ist, die als ein Modul an einer Lenkradwelle angeordnet ist, welche das Lenkrad mit dem Lenkgetriebe verbindet.

4. Servolenkung nach einem der Ansprüche 1 bis 3,
**dadurch gekennzeichnet,**
**dass** der Zusatzmoment-Aktuator einen Elektromotor aufweist, welcher an der Lenksäule angekoppelt ist.

5. Servolenkung nach einem der Ansprüche 1 bis 4,
**dadurch gekennzeichnet,**
**dass** die Mittel zur aktiven Aufbringung eines Zusatz-Lenkmoments einen Elektromotor und eine redundante elektronische Steuerungs- und Regelungseinheit (ECU) aufweisen und dass ein redundanter Lenkradmomentensensor (50) vorgesehen ist.

6. Servolenkung nach einem der Ansprüche 1 bis 5,
**dadurch gekennzeichnet,**
**dass** die Mittel zur aktiven Aufbringung eines Zusatz-Lenkmoments ein Getriebe, insbesondere ein Riemengetriebe, vorzugsweise ein Schrauben-/Schnecken-getriebe oder ein Stirnradgetriebe, aufweisen, das mit dem Zusatzmoment-Aktuator zusammenwirkt.

7. Verfahren zur Bestimmung eines Lenkmoments für eine hydraulische Servolenkung mit einem Lenkgetriebe (6) und mit einem hydraulischen Aktuator (20) zur Unterstützung einer Lenkradbetätigung durch den Fahrer eines Fahrzeugs, insbesondere eines Kraftfahrzeugs, der Mittel zur aktiven Aufbringung eines Zusatz-Lenkmoments zugeordnet sind, **dadurch gekennzeichnet, dass** ein hydraulischer Druck in einer hydraulischen Leitung zwischen einer hydraulischen Druckerhöhungseinheit (13) und einem Lenkventil (14) erfasst wird und nach Maßgabe des erfassten hydraulischen Drucks das Lenkmoment abgeschätzt oder ermittelt wird.

8. Verfahren nach Anspruch 7,
**dadurch gekennzeichnet,**
**dass** ein hydraulischer Druck erfasst wird, welcher einem hydraulischen Druck in einer jeweils aktiven Arbeitskammer (18,19) eines hydraulischen Aktuators (20) zur Unterstützung einer Lenkradbetätigung durch den Fahrer entspricht.

## Claims

1. Hydraulic power steering system with a steering gear (6) and a hydraulic actuator (20) for supporting a steering wheel actuation by the driver of a vehicle, in particular a motor vehicle, with means associated therewith for actively applying an additional steering torque, in which case the means for actively applying an additional steering torque includes at least one additional torque actuator (23, 30) and a means detecting the steering torque, said detecting means being a pressure detecting means (50) for a hydraulic pressure,
**characterized in that** the pressure detecting means (50) is arranged in a hydraulic conduit between a hydraulic pressure increasing unit (13) and a steering valve (14).

2. Hydraulic power steering system as claimed in claim 1,
**characterized in that** the pressure detecting means (50) is used to assess or determine a hydraulic pressure in a respectively active working chamber (18, 19) of a hydraulic actuator (20) in order to support a steering wheel actuation by the driver.

3. Hydraulic power steering system as claimed in any one of claims 1 or 2,
**characterized in that** the additional torque actuator is designed as a unit, being arranged as a module at a steering wheel shaft which interconnects the steering wheel and the steering gear.

4. Power steering system as claimed in any one of claims 1 to 3,
**characterized in that** the additional torque actuator includes an electric motor that is coupled to the steering column.

5. Power steering system as claimed in any one of claims 1 to 4,
**characterized in that** the means for actively applying an additional steering torque includes an electric motor and a redundant electronic controlling and regulating unit (ECU), and **in that** a redundant steering wheel torque sensor (50) is provided.

6. Power steering system as claimed in any one of claims 1 to 5,
**characterized in that** the means for actively applying an additional steering torque includes a gear, in particular a belt drive, preferably a helical worm gear, or a spur gear which cooperates with the additional torque actuator.

7. Method of determining a steering torque for a hydraulic power steering system with a steering gear (6) and a hydraulic actuator (20) for supporting a steering wheel actuation by the driver of a vehicle, in particular a motor vehicle, with means associated therewith for actively applying an additional steering torque,
**characterized in that** a hydraulic pressure is detected in a hydraulic conduit between a hydraulic pressure increasing unit (13) and a steering valve (14), and the steering torque is assessed or determined according to the detected hydraulic pressure.

8. Method as claimed in claim 7,
**characterized in that** a hydraulic pressure is detected which corresponds to a hydraulic pressure in a respectively active working chamber (18, 19) of a hydraulic actuator (20) for supporting a steering wheel actuation by the driver.

## Revendications

1. Servodirection hydraulique comportant un mécanisme de transmission directrice (6) et un mécanisme moteur (20) hydraulique pour assister un actionnement du volant de direction par le conducteur d'un véhicule, particulièrement d'un véhicule d'automobile, auquel sont associé des éléments pour activement appliquer un couple directeur supplémentaire, les éléments pour activement appliquer un couple directeur supplémentaire comportant au moins un mécanisme moteur de couple supplémentaire (23, 30) et un élément à détecter le couple directeur, l'élément à détection formant un élément (50) pour déterminer une pression hydraulique,
**caractérisé en ce que** 1' éléments à détecter la pression (50) est disposé dans une conduite hydraulique entre un ensemble à augmenter la pression hydraulique (13) et une soupape directrice (14).

2. Servodirection hydraulique selon la revendication 1,
**caractérisé en ce que** l'élément à détecter la pression (50) permet à évaluer ou détecter une pression hydraulique dans une chambre à travaille (18, 19) active d'un mécanisme moteur 20 hydraulique pour supporter un actionnement de volant de direction par le conducteur.

3. Servodirection selon l'une des revendications 1 ou 2,
**caractérisé en ce que** le mécanisme moteur de couple supplémentaire est formé comme ensemble disposé comme module à un arbre de volant à direction pour relier le volant au mécanisme de transmission.

4. Servodirection selon l'une des revendications 1 à 3,
**caractérisé en ce que** le mécanisme de couple supplémentaire comporte un électromoteur couplé à l'arbre directeur.

5. Servodirection selon l'une des revendications 1 à 4,
**caractérisé en ce que** les éléments pour appliquer un couple directeur supplémentaire comportent un électromoteur et un ensemble à commande et réglage électronique (ECU) redondant et qu'un capteur couple de volant (50) redondant est prévu.

6. Servodirection selon l'une des revendications 1 à 5,
**caractérisé en ce que** les éléments à appliquer un couple directeur supplémentaire comportent un mécanisme des transmission, en particulier un mécanisme transmission à courroies, de préférence à vis ou un mécanisme de transmission droite coopérant avec le mécanisme moteur de couple supplémentaire.

7. Procédé à déterminer un couple directeur pour une servodirection hydraulique, comportant un mécanisme de transmission directrice (6) et un mécanisme moteur (20) hydraulique pour supporter un actionnement de volant directeur du conducteur d'un véhicule, notamment d'un véhicule d'automobile, auquel sont associé des éléments pour activement appliquer un couple directeur supplémentaire,
**caractérisé en ce qu'**une pression hydraulique est déterminée dans une conduite hydraulique entre un ensemble à augmenter une pression hydraulique (13) et une soupape directrice (14), et que le couple directeur est évaluée ou déterminée dans la mesure de la pression hydraulique déterminée.

8. Procédé selon la revendication 7,
**caractérisé en ce qu'**une pression hydraulique est déterminée correspondant à une pression hydraulique présente dans chaque chambre de travaille (18, 19) active d'un mécanisme moteur hydraulique (20) pour supporter un actionnement du volant direction par le conducteur.
